(19) Europäisches Patentamt / European Patent Office / Office européen des brevets

(11) **EP 1 705 658 B1**

(12) **EUROPEAN PATENT SPECIFICATION**

(45) Date of publication and mention
of the grant of the patent:
**10.11.2010 Bulletin 2010/45**

(51) Int Cl.:
***G11B 23/40*** *(2006.01)*        ***G11B 7/125*** *(2006.01)*

(21) Application number: **06005961.5**

(22) Date of filing: **23.03.2006**

(54) **Method for setting laser power in optical disc drive**

Verfahren zur Einstellung der Laserleistung bei einem optischen Plattenlaufwerk

Procédé de réglage de la puissance laser dans un lecteur de disque optique

(84) Designated Contracting States:
**DE FR GB NL**

(30) Priority: **29.04.2005  KR 2005035811**
**09.06.2005  KR 2005049095**

(43) Date of publication of application:
**27.09.2006  Bulletin 2006/39**

(60) Divisional application:
**10003482.6 / 2 200 036**

(73) Proprietor: **Hitachi-LG Data Storage Korea, Inc.**
**Seoul 150-010 (KR)**

(72) Inventor: **No, Sang Chul**
**Pyeongtaek-si**
**Gyeonggi-do, 459-110 (KR)**

(74) Representative: **TER MEER - STEINMEISTER &**
**PARTNER GbR**
**Patentanwälte**
**Mauerkircherstrasse 45**
**81679 München (DE)**

(56) References cited:
**EP-A- 1 308 938        EP-A2- 0 478 275**
**US-A1- 2004 224 041        US-A1- 2005 046 692**
**US-A1- 2005 058 044**

**Description**

BACKGROUND OF THE INVENTION

1. Field of the Invention

The invention is related to a method for setting laser power, and, more particularly, to a method for setting a laser output power level in an optical disc drive.

2. Background of the Related Art

Optical discs have been developed recently which allow data to be recorded on a data surface of the disc, and a label with a desired design to be printed on a non-data, or label, surface opposite the data surface of the disk. The surface of the disc on which a label is printed is referred to as the label surface of the disc. Labels may be transferred onto the label surface of the disc using a laser etching technology commonly referred to as LightScribe registered trademark, in which a laser burns or etches an image onto a specially prepared, non-data side of an optical disc.

Generally, laser power required to record data on an optical disc varies based on recording speed and other recording medium characteristics. Typically, an input voltage (DAC) of a Radio Frequency (R/F) Integrated Circuit (IC) is controlled to set laser power at a desired magnitude. However, the actual magnitude of laser power output for a given input voltage (DAC) may differ based on differences or deviations in optical pickups and R/F IC characteristics. Therefore, during manufacture of an optical disc drive, the relationship between an input voltage (DAC) and an actual output laser power (P) associated with the input voltage (DAC) is measured and stored in a ROM (Read Only Memory) for each device, such that an output laser power of a desired magnitude can be set based on the measured result.

Generally, in order to calculate the relationship between the input voltage and the output laser power, actual output laser power is measured using a device specifically designed for that purpose such as, for example, a laser power meter, during manufacture of the optical disc drive. The relationship between the input voltage applied to the R/F IC and the laser power generated from the optical pickup unit is typically at least partially linear. Therefore, a linear equation relating the input voltage (DAC) to the laser power (P), which reflects power setup data for selected points during the manufacturing process, has been widely used to establish this relationship.

When printing a label on a label surface of an optical disc such as, for example, the LightScribe registered trademark disc discussed above, an input voltage corresponding to a desired laser power is calculated using a linear relationship between the input voltage and the desired laser power detected during the manufacturing process of the optical disc drive. The calculated input voltage is applied to the R/F IC, such that a label-printing operation can be performed with a laser power of predetermined magnitude.

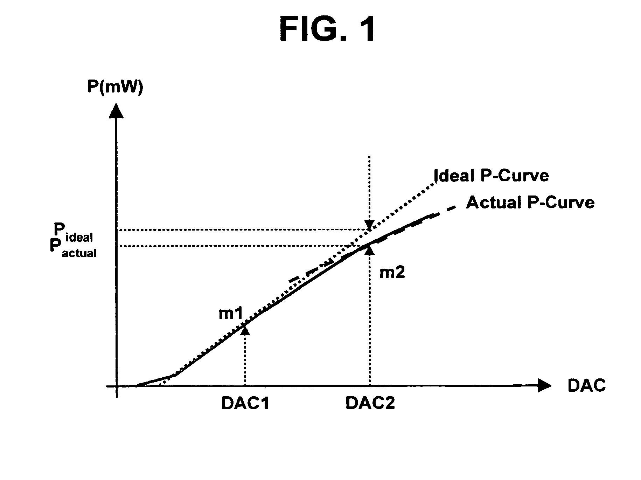

However, this type of label-printing operation requires the laser to output power at a much higher level than would typically be required to perform a recording operation on the data surface of the disc. If the laser output value is increased above a predetermined value based on an increment of the input voltage, the relationship between the input voltage and the laser power is no longer linear, as shown in FIG. 1, and the ratio (i.e., slope) of output laser power to input voltage is gradually reduced. In this manner, if the linear relationship between the input voltage and the output laser power is changed, an unexpected error occurs in a laser power setup process as denoted by $\Delta P_{error} = P_{actual} - P_{ideal}$, resulting in a deterioration in printing quality on the label surface of the disc.

EP 1 308 938 A2 describes an apparatus for recording data and visible images on an optical disk. Herein, a laser power controller controls the power for a laser beam emitted by a laser diode of an optical pickup. Specifically, the laser power controller controls a laser driver, so that the optical pickup emits the laser beam at an intensity that matches the optical target value of the laser power designated by a control unit. The laser power control exercised by the laser power controller is a feedback control, using the value of a current supplied by a front monitor diode of the optical pickup. More specifically, the laser power controller performs sample and holding for a value that corresponds to the intensity of a laser beam that is emitted and that is received by the front monitor diode. In a further modification, a laser power circuit employs a linear relationship between a supplied current value and a laser power, which is acquired in advance through an experiment, in order to set a target write level by the control unit to obtain a value for a current that is to be supplied to the laser diode in order to emit the laser beam at the write level. The laser power controller permits the laser driver to supply the thus obtained current to the laser diode. In this manner, the emission of the laser beam at the write level can be controlled without using the results obtained by receiving the laser beam that is emitted at the target write level.

EP 0 478 275 A2 describes a method of and an apparatus for controlling laser power in an optical disk drive. The laser power of a laser diode is controlled by a laser driver providing a driving current to the laser diode. Herein, the required driving current is determined by a linear approximation of the relationship between driving current and desired laser power. In a further modification, a multitude of linear approximations with different slopes having the same offset values could be employed.

## SUMMARY OF THE INVENTION

It is an object of the present invention to provide a method of printing a label on a recordable medium, having an improved printing quality.

Further it is an object of the invention to provide a method for setting a la ser power such that a high-quality label can be printed on a LightScribe (registered trademark) disc.

It is another object of the invention to provide a method for setting a laser p ower of a laser diode such that a high-output laser power required when a label is printed o n a LightScribe (registered trademark) disc can be correctly output.

This object is solved by the method of printing a label on a recordable medium according to new claim 1. Further advantages, refinements and embodiments of the invention are described in the respective sub-claims.

## BRIEF DESCRIPTION OF THE DRAWINGS

The invention will be described in detail with reference to the following drawings in which like reference numerals refer to like elements wherein:

FIG. 1 is a graph of the relationship between an input voltage (DAC) and a laser power (P);

FIG. 2 is a block diagram of an optical disc drive in which a laser power setup method may be implemented;

FIG. 3 is a flow chart of a method for setting a laser power of an optical disc drive;

FIG. 4 illustrates a layout of a label surface of an exemplary optical disc;

FIG. 5 is a graph of the relationship between a laser power (P) and an FPDO voltage;

FIG. 6 illustrates a layout of a control feature zone of the exemplary optical disc shown in FIG. 4;

FIG. 7 is a flow chart of a method for setting a laser power of an optical disc drive in accordance with an embodiment of the invention;

FIG. 8 is a graph of the relationship between an input voltage and a laser power used to determine a linear function at a position proximate low and high reference laser power levels, in accordance with an embodiment of the invention;

FIG. 9 is a graph of a non-linear relationship between input voltage and laser power associated with three devices;

FIG. 10 is a tabulation, of actual laser power output when implementing a method in accordance with an embodiment of the invention compared to laser power output using conventional methods; and

FIG. 11 is a graphical representation of the tabulated data presented in FIG. 10.

## BEST MODE OR DETAILED DESCRIPTION

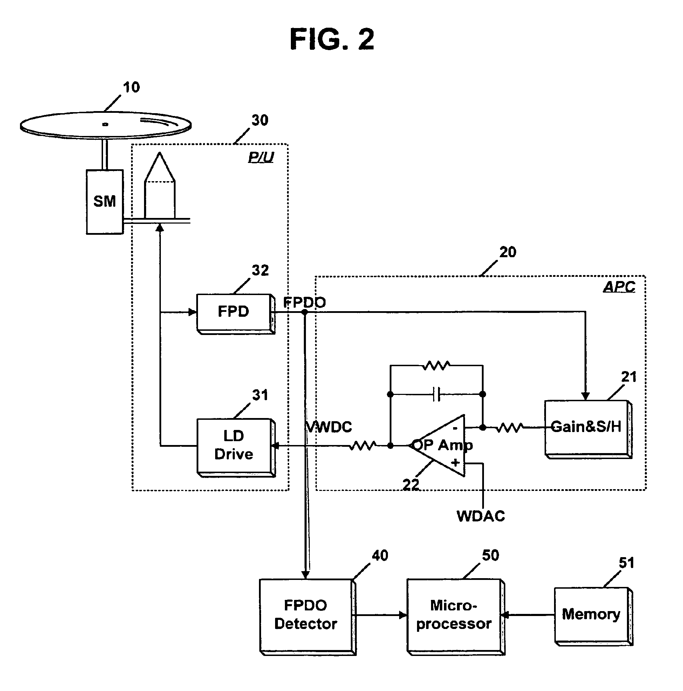

FIG. 2 is a block diagram of an optical disc drive (ODD) in which a laser power setup method in accordance with an embodiment of the invention may be implemented. The ODD may include an automatic power control (APC) circuit 20 having a gain & S/H (Sample/Hold) unit 21 and an operational amplifier (OP-AMP) 22; an optical pickup unit 30 including a Laser Diode (LD) drive 31 and a Front Photo Detector (FPD) 32; a Front Photo Detector Out (FPDO) detector 40 for detecting a level of a signal output by the FPD 32; a memory 51 such as, for example, a flash ROM; and a microprocessor 50.

The APC circuit 20 generates a laser power voltage (VWDC) on the basis of an input FPDO signal and an input voltage (WDAC) signal. The LD drive 31 outputs an optical beam corresponding to the output laser power voltage VWDC. The FPD 32 detects the optical beam generated by the LD drive 31, and outputs an FPDO signal corresponding to the detected optical beam. The memory 51 stores power setup data detected during manufacture of the ODD, and stores sensitivity data "m" of an LD sensor (not shown) contained in an LD (not shown) of the optical pickup unit 30. The microprocessor 50 performs a power setup operation on a label surface of an optical disc 10 using the above-mentioned values stored in the memory 51, and performs a label printing operation at an output laser power determined by the above-mentioned power setup operation.

Power setup data units associated with a data surface and a label surface of the disc during manufacture of the ODD may be detected and stored in the memory 51. The microprocessor 50 may then determine a laser power level associated with the data surface or the label surface of the optical disc 10 based on the above-mentioned power setup data stored in the memory 51.

It is assumed that a setup laser power is substantially equal to a record power, and thus the method for setting a laser output power may be applicable to both the record power and the reproduction power in the same manner as in the mentioned setup laser power discussed above.

The APC 20 is contained in an R/F IC of the ODD, and requires a laser power of predetermined magnitude to cause the ODD to perform a data recording operation on the disc 10. The laser power is determined by the input voltage (WDAC) of the APC 20, and is generally maintained at a constant level by the APC 20.

The FPDO signal corresponds to the output power of the laser beam generated from the LD drive 31, and is fed back by the FPD 32. The input voltage (WDAC) corresponds to the setup laser power. The APC 20 generates the FPDO signal fed back from the FPD 32 and a laser power voltage signal (VWDC) corresponding to the input voltage (WDAC) received via an external Digital-to-Analog Converter (DAC) (not shown), such that it can constantly maintain a predetermined laser power.

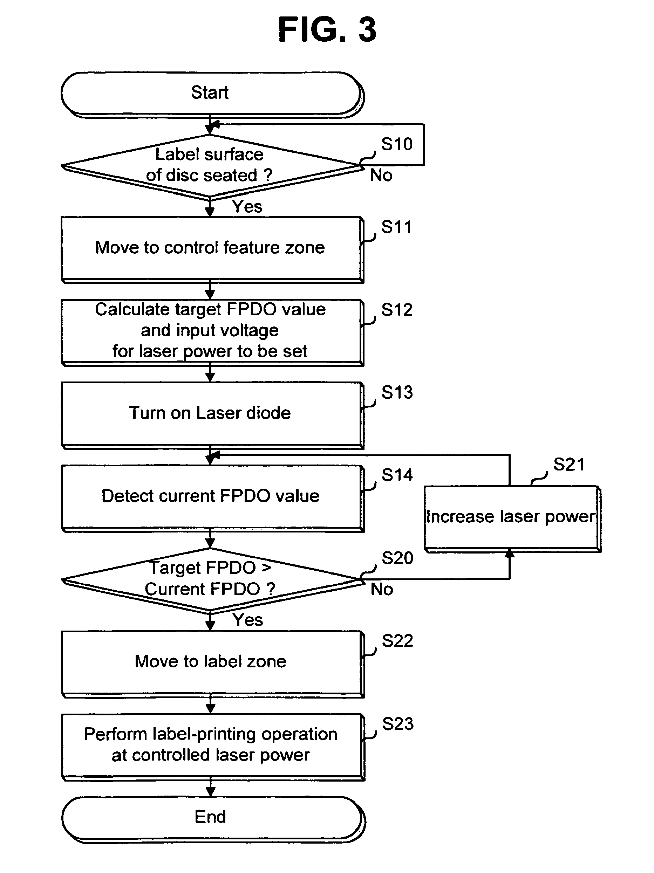

FIG. 3 is a flow chart of a method for setting a laser power of an optical disc drive.

A linear equation relating the input voltage WDAC applied to the R/F IC to the laser power generated by the optical pickup unit 30 is established during manufacture of the ODD. If the optical pickup unit 30 generates a laser power (P1) based on a predetermined input voltage (WDAC1) applied to the R/F IC, the microprocessor 50 measures the laser power (P1), and at the same time calculates a sensitivity m associated with the optical pickup unit 30 based on the FPDO value (F1) detected by the FPDO detector 40 after being generated by the FPD 32.

The microprocessor 50 may use an appropriate measuring device, such as, for example, a laser power meter, to measure the laser power (P1), and may use information associated with various components of the optical pickup unit 30, such as, for example, an LD sensor, to determine the sensitivity m. The microprocessor 50 may calculate the sensitivity m using a predetermined equation denoted below as Eqn. 1.

$$m = (2.5 - F1)/P1 \qquad\qquad\qquad\qquad (\text{Eqn. 1})$$

The power setup data detected during manufacture of the ODD, including a linear equation relating an input voltage to a laser power and the sensitivity m of the LD sensor, may be stored in the memory 51.

A method for setting a laser power of an optical disc drive in accordance with an embodiment of the invention will now be described with reference to FIG. 3.

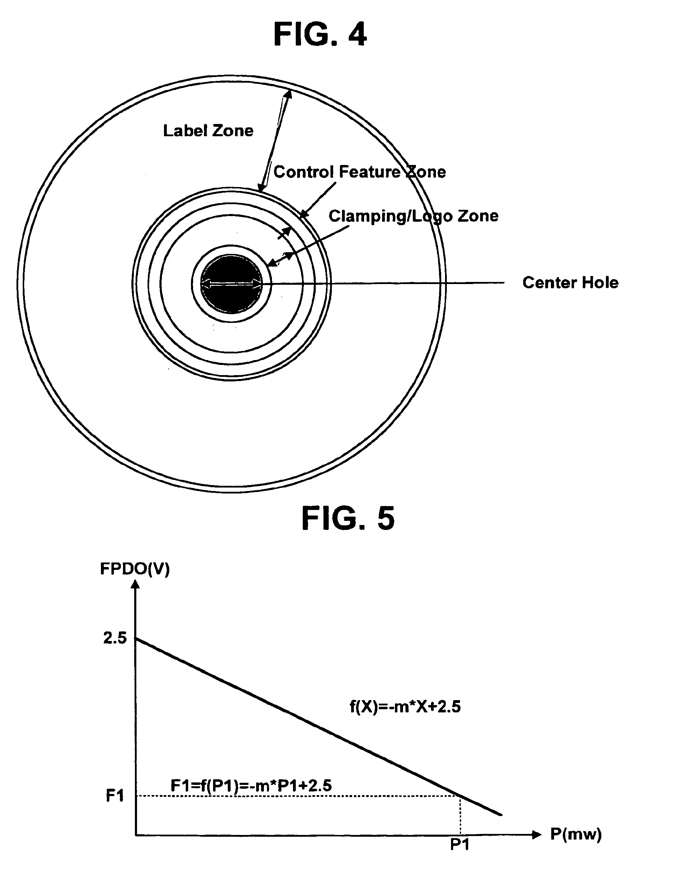

If an optical disc 10 which includes a label surface, such as, for example, the LighrScribe (registered trademark) disc discussed above, is seated in the ODD, the microprocessor 50 determines whether a seated surface of the optical disc 10 is a label surface at step S10. The label surface of the disc 10 includes a control feature zone in which speed control information and media information are recorded, and a label zone in which a label-printing operation is performed, as shown in FIG. 4. If the label surface is seated at step S10, the microprocessor 50 shifts the optical pickup unit 30 to the control feature zone of the optical disc 10 at step S11, and performs a power setup operation which will hereinafter be described.

The microprocessor 50 sets an output laser power required to perform a label-prinding operation on the label surface of the disc 10, and calculates a target FPDO value corresponding to the set output laser power at step S12. This output laser power may be 60 mW. However, other values may also be appropriate. The target FPDO may be calculated by a predetermined equation denoted below as Eqn. 2.

$$f(X) = -m^*X + 2.5 \qquad\qquad\qquad\qquad (\text{Eqn. 2})$$

In Eqn. 2, X = output laser power, m= LD sensor sensitivity, and f(X)= FPDO value corresponding to the output laser power X. The values of X and m may be stored in the memory 51. The relationship between the output laser power and the FPDO value is shown in FIG. 5.

The microprocessor 50 calculates an input voltage (WDAC) corresponding to the output laser power using the power setup data stored in the memory 51 at step S12. In this case, the power setup data corresponds to a linear equation relating the input voltage to the laser power established during manufacture of the ODD.

The microprocessor 50 transmits the calculated input voltage (WDAC) to the OP Amp 22 of the APC 20. The APC 20 generates a laser power voltage (VWDC) corresponding to the input voltage. The LD drive 31 generates a light-emitting beam corresponding to the output laser power voltage (VWDC) at step S13.

The FPD 32 detects a light-emitting beam generated from the LD drive 31, and outputs a corresponding FPDO signal. The FPDO detector 40 detects a value of che output FPDO signal, and transmits the detected FPDO value, referred to as a current FPDO for ease of discussion, to the microprocessor 50 at step S14,

The microprocessor 50 compares the target FPDO value with the current FPDO value at step S20. If the target FPDO value is higher than the current FPDO value, the microprocessor 50 maintains the setup output laser power without any change. However, if the target FPDO value is equal to or less than the current FPDO value, the microprocessor 50 increases the output laser power by a predetermined value based on a difference between the target FPDO value and the current FPDO value at step S21. The above-mentioned operations are repeated, such that a desired laser power can be established.

An output laser power which is higher than that of the data surface is required during a label-printing operation. Generally, if the laser output is increased above a predetermined value based on an increment of the input voltage, the linear relationship between the input signal and the output signal cannot be established, as discussed above with respect to FIG. 1, resulting in an unexpected error in a laser power setup process. Thus, although a high-output laser power for the label-printing operation may be provided, the power setup operation discussed above may be implemented to establish an optimum value for laser output power, with substantially no error.

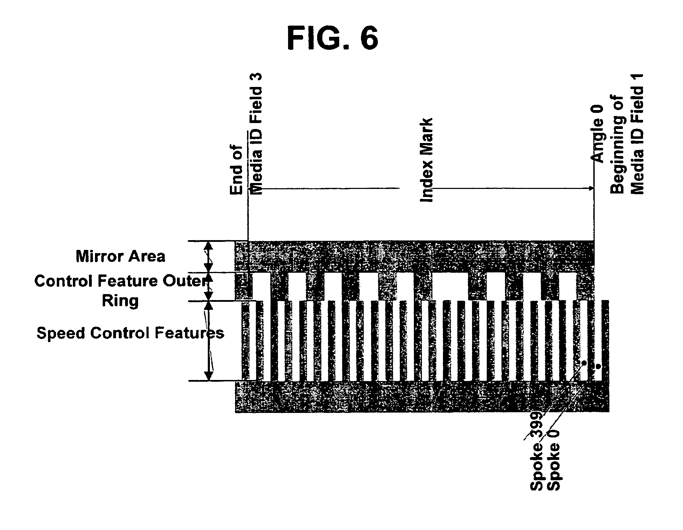

FIG. 6 shows a detailed configuration of a control feature zone of a label surface of an optical disc such as, for example, the LightScribe (registered trademark) disc discussed above. The control feature zone includes a speed control feature area, a control feature outer ring area, and a mirror area.

The microprocessor 50 may move the optical pickup unit 30 to the control feature zone and perform the laser power setup operation discussed above in the control feature zone. The microprocessor 50 controls the optical pickup unit 30 to detect an index mark from an index mark pattern in the control feature outer ting area, detects a spoke with a spoke value of 0 at the beginning of the index mark pattern, and performs a synchronization operation to read media ID information from a series of media ID fields.

If an optimum output laser power is determined by the power setup operation discussed above, the microprocessor 50 moves the optical pickup unit 30 to the label zone of the optical disc 10 at step S22, and performs a label-printing operation using the output laser power adjusted by the power setup operations discussed above with respect to steps S14, S20, and S21 at step S23. The determined output laser power is maintained at a substantially constant level by the APC 20 throughout the label printing operation.

Since unexpected traces or marks may be generated on the label surface even when the power setup operation, the optical pickup unit 30 moves to the control feature zone of the label surface to perform the power setup operation. The label-printing operation can only be conducted on a label surface onto which a dye that is responsive to the laser output has first been deposited. The dye is only deposited on the label zone portion of the label surface of the disc, and not on the control feature zone.

First power setup data required to record data on the data surface of the disc, and second power setup data required to print a label on the label surface of the disc may be detected and stored during manufacture of the ODD. A corresponding laser power may be determined by the power setup data selected based on different categories of recording operations.

The magnitude of an output laser power (P) associated with an input voltage (DAC) may vary based on differences between characteristics of an optical pickup unit and the R/F IC. To address these discrepancies, a laser power setup operation for each device may be performed during manufacture of the ODD, and the relationship between an input voltage and an actual laser power corresponding to the input voltage may be detected and stored. The laser power setup operation may be performed at a first reference record power for the data surface of the optical disc, and may be also performed at a second reference record power for the label surface of the disc, such that first power setup data for the data surface recording and second power setup data for the label surface recording may be detected and stored. The first reference record power may be approximately 20mW, and the second reference record power may be approximately 40mW. However, other values may also be appropriate.

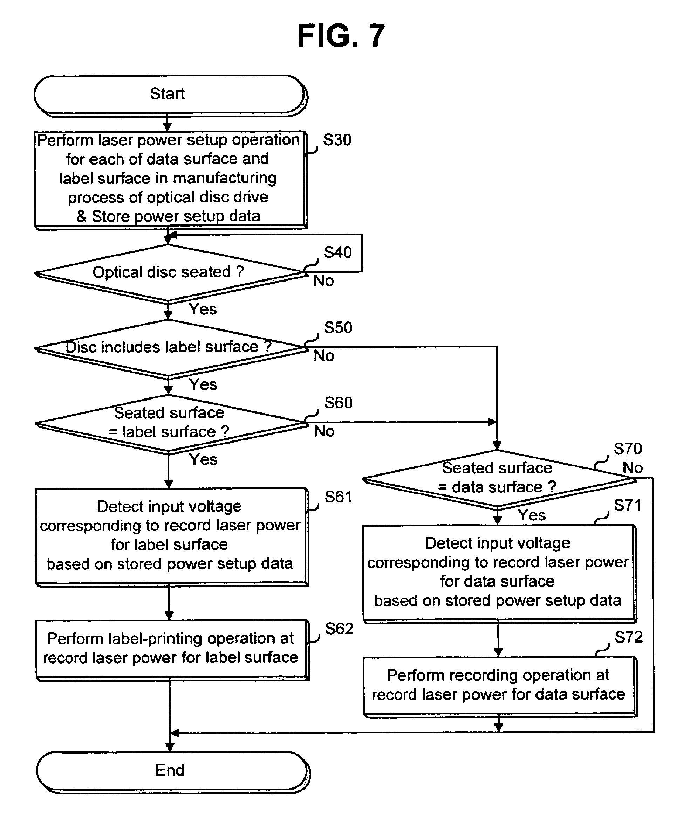

FIG. 7 is a flow chart of a method for setting a laser power of an optical disc drive (ODD) in accordance with an embodiment of the invention, which will hereinafter be described with reference also to FIG. 2.

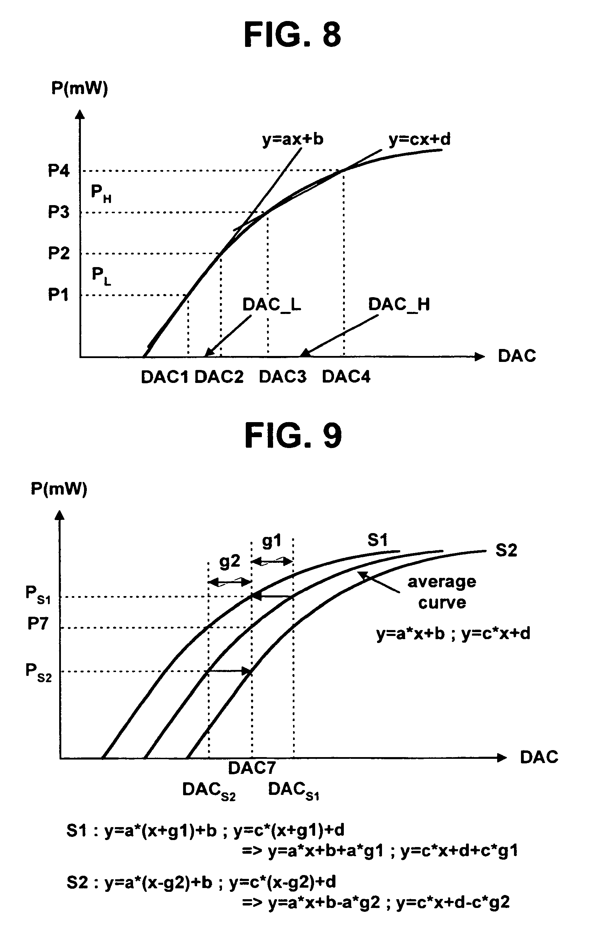

During manufacture of the ODD, a laser power setup operation is performed based on a low-output reference record power ($P_L$) for the data surface of the optical disc 10, and is also performed based on a high-output reference record power ($P_H$) for the label surface of the disc 10. As shown in FIG. 8, output laser power values P1-P4 for corresponding predetermined input voltages DAC1-DAC4 are detected based on the reference record power values $P_L$ and $P_H$. Linear functions corresponding to the detected output laser power values P1 ~ P4 are determined to be power setup data, and are stored in the memory 51, respectively, at step S30.

More specifically, two input voltages DAC1 and DAC2 spaced apart from each other by a predetermined value DAC_L, at which it is expected that a low-output reference laser power (such as, for example, 20mW) will be generated, are sequentially applied to the R/F IC, and actual output laser power values P1 and P2 are detected by a device such as, for example, a laser power meter. The above two input voltages DAC1 and DAC2 should be values in the vicinity of the low-output reference laser power. If, for purposes of discussion, the low-output reference laser power is, for example, 20 mW, then DAC1 and DAC2 may be, for example, 15mW and 25mW. Two values a and b for use in a linear equation

$$y = ax + b \qquad \text{(Eqn. 3)}$$

where y = output laser power, and x= input voltage determined by two points (DAC1, P1) and (DAC2, P2) are calculated, and the calculated result is stored as power setup data for the data surface in the memory 51. An input voltage value capable of generating the low-output reference laser power of, for example, 20mW is simply calculated based on the above-mentioned function, and the calculated input voltage value may be stored as power setup data in the memory 51.

Two input voltages DAC3 and DAC4 spaced apart from each other by a predetermined value DAC_H, at which it is expected that a high-output reference laser power (such as, for example, 40mW) will be generated, are sequentially applied to the R/F IC, and actual output laser power values P3 and P4 are detected. The above two input voltages DAC3 and DAC4 should be values in the vicinity of the high-output reference laser power. If, for purposes of discussion, the high output reference laser power is, for example. 40 mW, then DAC 3 and DAC 4 may be, for example, 35mW and 45mW. Two values c and d for use in a linear equation

$$y = cx + d \qquad\qquad\qquad (Eqn.\ 4)$$

determined by two points (DAC3, P3) and (DAC4, P4) are calculated, and the calculated result is scored as power setup data for the label surface in the memory 51. Likewise, the input voltage value capable of generating the high-output reference laser power of, for example, 40mW is simply calculated based on the above-mentioned function, and the calculated input voltage value may be stored as power setup data in the memory 51. Although a high output reference laser power of 40mW is referred to, simply for ease of discussion, as a reference record power for the label surface, other values which are less than a maximum output laser power of approximately 70mW may also be appropriate as the reference record power.

Thus, an optical disc drive (ODD) which has had power setup data for the data surface and the label surface stored during the manufacturing process may set an appropriate laser output power level based on the power setup data discussed above, and may perform a record operation on the data surface and/or a label-printing operation on the label surface.

The optical disc 10 is seated in the optical disc drive at step S40 and the microprocessor 50 determines if the seated optical disc 10 includes both a data surface and a label surface, such as, for example, the LightScribe (registered trademark) disc discussed above, at step S50. If the seated optical disc 10 includes both a data and a label surface at step S50, the microprocessor 50 determines if a surface on which the optical disc 10 is seated is a label surface at step S60. The position of a reflection surface and an amount of light reflected from a laser beam incident on the label surface are different from those in the data surface, and thus the seat surface of the optical disc 10 can be easily determined based on the different reflection surface positions and reflected light.

The microprocessor 50 then sets a laser power having a desired magnitude based on data associated with a corresponding seat surface from among a plurality of power setup data units stored in the memory 51, and performs a recording operation as appropriate. More particularly, if it is determined that the seat surface of the optical disc 10 is the label surface at step S60, the microprocessor 50 detects an input voltage (DAC) corresponding to a record laser power associated with the labelsurface from among the power setup data units stored in the memory 51 at step S61. The detected input voltage (DAC) is applied to the OP Amp 22 contained in the APC 20. The FPDO signal fed back from the FPD 32 and the laser power voltage (VWDC) corresponding to the input voltage are generated by the APC 20, such that a recording operation such as, for example, a label-printing operation is performed on the label surface of the disc 10 at step S62.

If it is determined that the seat surface of the optical disc 10 is the data surface at step S70, the microprocessor 50 detects an input voltage (DAC) corresponding to a record laser power associated with the data surface from among the plurality of power setup data units stored in the memory 50 at step S71. The detected input voltage (DAC) is applied to the OP Amp 22 of the APC 20. The laser power voltage (VWDC) corresponding to the input voltage (DAC) is generated and a recording operation is performed on the data surface at step S72.

A laser power setup operation during manufacture of the optical disc drive may be performed in different ways.

FIG. 9 is a graph of a non-linear relationship between an input voltage (DAC) and a laser power (P) for three devices. The three curved lines appear somewhat similar to each other, due at least in part to characteristics associated with an optical pickup unit, and, more particularly, to characteristics of a laser diode of the optical pickup unit. Provided that a slope characteristic indicative of a linear function relating the input voltage to the output laser power is recognized, the above-mentioned linear function can be recognized on the condition that only the output laser power associated with a predetermined input voltage in each device is detected. The slope characteristic associated with each of the data surface and the label surface is pre-detected and stored based on the results of prior analysis. When performing the laser power setup operation, the output laser power for a predetermined input voltage is detected for each of the data surface and the label surface.

More specifically, during the laser power setup operation, a first input voltage (DAC5) established for the reference record power for the data surface, and a second input voltage (DAC6) established for the reference record power for the label surface are sequentially applied to the R/F IC, and corresponding actual output laser power values P5 and P6 can be detected using an appropriate device, such as, for example, a laser power meter. The linear functions discussed above for the data surface and the label surface, respectively,

$$y = ax + b \qquad \qquad \text{(Eqn. 3)}$$

$$y = cx + d, \qquad \qquad \text{(Eqn. 4)}$$

in which x=DAC, y=laser power, a and c are indicative of the pre-stored slope characteristics, and b and d can be calculated from output laser power values P5 and P6 and the input voltages DAC5 and DAC6 can be used to calculate corresponding power setup data, which is then stored in the memory 51.

A laser power setup operation conducted during manufacture of an optical disc drive may be performed in different ways.

The three curved lines shown in FIG. 9 are indicative of individual function relationships between input voltage and laser power, and are somewhat similar to each other. That is, as a predetermined curved line moves along an input voltage axis or moves along a laser power axis, it is almost identical to the other curved lines. Therefore, if only one point is measured for a predetermined optical pickup unit where an average or mean value for several optical pickup units has pre-stored in association with the functional relationship between the input voltage and the laser power, a functional relationship between the input voltage and the laser power for the predetermined optical pickup unit can be readily calculated.

Several points contained in an average curve , or functional relationship between input voltage and laser power may be measured and stored. A first linear function such as Eqn. 3, which is capable of at least partially linearizing the curcrein the vicinity of a low-output reference laser power, and a second linear function such as Eqn. 4 in the vicinity of a high-output reference laser power are calculated based on the points, and the calculated results may be stored in the memory.

When a laser power setup operation is performed for a predetermined optical disc drive, a predetermined input voltage (DAC7) is applied to the R/F IC, and actual output laser power (P7) is detected. As shown in FIG. 9, in the case of an average curve, the output laser power, generated when the predetermined input voltage (DAC7) is applied, is indicative of a predetermined number of P7. The predetermined input voltage (DAC7) may be a predetermined value between a first input voltage capable of generating a low-output reference laser power and a second input voltage capable of generating a high-output reference laser power.

Referring to the curve S1 in FIG. 9, the output laser power corresponding to the predetermined input voltage (DAC7) is denoted by a point $P_{s1}$, the point (DAC7, $P_{s1}$) is positioned above the average curve S1, and the input voltage for providing an output laser power of $P_{s1}$ on the average curve is $DAC_{s1}$. Therefore, if the average curve is shifted to the left by a distance g1 (i.e., $DAC_{s1}$ - DAC7), it substantially coincides with the curve S1.

Referring to the curve S2 in FIG. 9, the output laser power corresponding to the predetermined input voltage (DAC7) is denoted by a point $P_{s2}$, the point (DAC7, $P_{s2}$) is positioned below the average curve, and the input voltage for providing an output laser power of $P_{s2}$ on the average curve is $DAC_{s2}$. Therefore, if the average curve is shifted to the right by a distance g2 (i.e., DAC7 - $DAC_{s2}$), it substantially coincides with the curve of 2.

It is assumed that a first linear function in the vicinity of a low-output reference laser power associated with the average curve is denoted by y=ax+b, and that a second linear function in the vicinity of a high-output reference laser power associated with the average curve is denoted by y=cx+d.

The first and second linear function values and associated with the curve S1 may be calculated by a first equation y=a*(x+g1)+b and a second equation y=c*(x+g1)+d, respectively. As a result, the value of the first linear function may be denoted by y=a*x+b+a*g1, and the value of the second lineal denoted by y=c*x+d+c*g1.

The values of the first and second linear functions associated with the curve S2 may be calculated by the equation y=a*(x-g2)+b and y=c*(x-g2)+d, respectively. As a result, the value of the first linear function may be denoted by y=a*x+b-a*g2, and the value of the second linear function may be denoted by y=c*x+d-c*g2. Therefore, no change occurs in the slopes a and c, and only the y-intercept values b and d are changed. In the case of the curve S1, the y-intercept value is denoted by b'=b+a*g1 and d'=d+c*g1. In the case of the curve S2, the y-intercept value is denoted by b"=b-a*g2 and d"=d-c*g2.

Therefore, when a laser power setup operation is performed during manufacture of the optical disc drive, the output laser power associated with only one input voltage may be simply measured, and a linear function in the vicinity of each of a low-output reference laser power and a high-output reference laser power may be simply calculated.

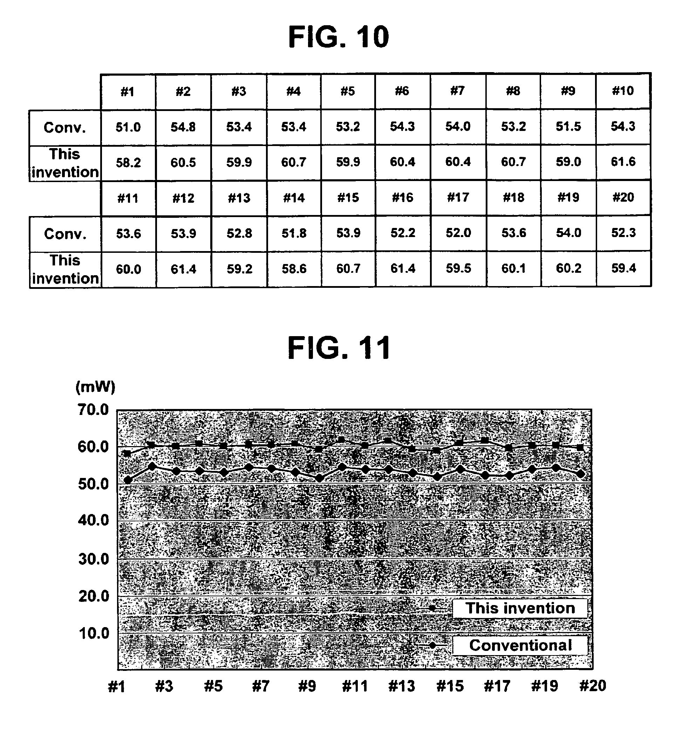

FIG. 11 is a graphical representation of actual laser power output when implementing a method in accordance with embodiments of the invention compared to laser power output using conventional methods, as tabulated in FIG. 10. As can be seen from FIGS. 10-11, the methods in accordance with embodiments of the invention are superior to the conventional art where an error and deviation between the target power and the output power are concerned, in that the invention yields a laser power error less than that of the conventional art. When data is recorded on the label surface at a high-output laser power of, for example, 60mW, an actual output laser power of in accordance with embodiments of the invention is closer to the laser power of 60mW than in the conventional art. Furthermore, the invention exhibits reduced deviation in the output laser power as compared with the conventional art.

As apparent from the above description, a method for setting a laser power of an optical disc drive according to the present invention can determine an optimum laser power for a label surface without forming an image on the label surface, and can minimize an error of the output laser power, resulting in improvement of a label-printing operation and label quality.

**Claims**

1. A method of printing a label on a recordable medium including a data surface configured to receive and store data on a first side of the recordable medium, and a label surface configured to receive a label printed thereon on a second side of the recordable medium opposite the first side, the method comprising:

   - reading a pattern from the recordable medium and determining if a seated surface facing an optical pick up unit (30) of an optical disc drive (ODD) is a label surface or a data surface; and
   - controlling laser power in a control feature zone of the label surface, if it is determined that the seated surface facing the optical pick up unit (30) is a label surface, and performing a label printing operation on a label area of the label surface of the recordable medium, wherein the method for controlling laser power comprises

      -- identifying an output laser power required based on the corresponding seated surface; and
      -- setting laser power at a predetermined magnitude based on a previously calculated and stored slope characteristic between a laser input voltage (DAC) and an output laser power (P) associated with an output laser power range ($P_L$, $P_H$) in which the identified output laser power is included,

   **characterized in that** the slope characteristic is determined based on two linear functions, the one of the linear functions being calculated in the vicinity of a low-output reference laser power ($P_L$), and the other of the linear functions being calculated in the vicinity of a high-output reference laser power ($P_H$).

2. The method of claim 1, wherein the previously calculated and stored slope characteristic is detected and stored during manufacture of the optical disc drive (ODD).

3. The method of claim 1, wherein the output laser power ranges ($P_L$, $P_H$) comprise a first range including a first record power for a data surface of the optical disc, and a second range including a second record power for a label surface of the optical disc.

4. The method of claim 1, wherein detecting and storing of the previously calculated and stored slope characteristic for an output laser power range ($P_L$, $P_H$) comprises:

   - detecting a corresponding output laser power (P) for at least one predetermined input value for the output laser power range ($P_L$, $P_H$); and
   - calculating a substantially linear equation which relates an input value to an output laser value based on the two predetermined input values and the corresponding detected output laser powers (P), and storing the linear equation.

5. The method of claim 4, wherein the output laser power (P) is detected by a laser power meter.

6. The method of claim 1, wherein the recordable medium is a Light Scribe (registered trademark) disc.

**Patentansprüche**

1. Verfahren zum Drucken eines Etiketts auf ein aufzeichnungsfähiges Medium, wobei auf einer ersten Seite des aufzeichnungsfähigen Mediums eine Datenoberfläche vorgesehen ist, die konfiguriert ist, um Daten aufzunehmen und zu speichern, und auf einer zweiten Seite des aufzeichnungsfähigen Mediums gegenüber der ersten Seite eine Etikettoberfläche vorgesehen ist, die konfiguriert ist, um ein darauf gedrucktes Etikett aufzunehmen, wobei das Verfahren umfasst:

   - Lesen eines Musters von dem aufzeichnungsfähigen Medium und Bestimmen, ob eine Sitzoberfläche, die einer optischen Aufnehmereinheit (30) eines Laufwerks (ODD) für optische Platten zugewandt ist, eine Etikettoberfläche oder eine Datenoberfläche ist; und
   - Steuern von Laserleistung in einer Steuermerkmalszone der Etikettoberfläche, falls bestimmt wird, dass die Sitzoberfläche, die der optischen Aufnehmereinheit (30) zugewandt ist, eine Etikettoberfläche ist, und Ausführen eines Etikettdruckvorgangs auf einem Etikettbereich der Etikettoberfläche des aufzeichnungsfähigen Mediums, wobei das Verfahren zum Steuern der Laserleistung umfasst:

   -- Ermitteln einer erforderlichen Ausgangslaserleistung anhand der entsprechenden Sitzoberfläche; und
   -- Einstellen der Laserleistung auf eine vorgegebene Größe anhand einer im Voraus berechneten und gespeicherten Steigungscharakteristik zwischen einer Lasereingangsspannung (DAC) und einer Ausgangslaserleistung (P), die einem Ausgangslaserleistungs-Bereich ($P_L$, $P_H$) zugeordnet ist, in dem die ermittelte Ausgangslaserleistung enthalten ist,

   **dadurch gekennzeichnet, dass**
   die Steigungscharakteristik auf der Grundlage von zwei linearen Funktionen bestimmt wird, wobei eine der linearen Funktionen in der Umgebung einer niedrigen Referenzlaserleistung ($P_L$) berechnet wird und die andere der linearen Funktionen in der Umgebung einer hohen Ausgangsreferenzlaserleistung ($P_H$) berechnet wird.

2. Verfahren nach Anspruch 1, wobei die früher berechnete und gespeicherte Steigungscharakteristik während der Herstellung des Laufwerks (ODD) für optische Platten detektiert und gespeichert wird.

3. Verfahren nach Anspruch 1, wobei die Ausgangslaserleistungsbereiche ($P_L$, $P_H$) einen ersten Bereich, der eine erste Aufzeichnungsleistung für eine Datenoberfläche der optischen Platte enthält, und einen zweiten Bereich, der eine zweite Aufzeichnungsleistung für eine Etikettoberfläche der optischen Platte enthält, umfassen.

4. Verfahren nach Anspruch 1, wobei das Detektieren und Speichern der früher berechneten und gespeicherten Steigungscharakteristik eines Ausgangslaserleistungsbereichs ($P_L$, $P_H$) umfasst:

   - Detektieren einer entsprechenden Ausgangslaserleistung (P) für wenigstens einen vorgegebenen Eingangswert für den Ausgangslaserleistungsbereich ($P_L$, $P_H$); und
   - Berechnen einer im Wesentlichen linearen Gleichung, die einen Eingangswert mit einem Ausgangslaserwert anhand der zwei vorgegebenen Eingangswerte und der entsprechenden detektierten Ausgangslaserleistungen (P) in Beziehung setzt, und Speichern der linearen Gleichung.

5. Verfahren nach Anspruch 4, wobei die Ausgangslaserleistung (P) durch einen Laserleistungsmesser detektiert wird.

6. Verfahren nach Anspruch 1, wobei das aufzeichnungsfähige Medium eine Light-Scribe-Platte (Light-Scribe: eingetragenes Warenzeichen) ist.

**Revendications**

1. Procédé pour imprimer une étiquette sur un support enregistrable incluant une surface à données configurée pour recevoir et stocker des données sur un premier côté du support enregistrable, et une surface à étiquette configurée pour recevoir une étiquette imprimée sur celle-ci sur un second côté du support enregistrable à l'opposé du premier côté, le procédé comprenant les opérations consistant à :

   - lire un motif depuis le support enregistrable et déterminer si une surface de pose en face d'une unité de lecture optique (30) d'un lecteur de disques optiques (ODD) est une surface à étiquette ou une surface à données ; et

- commander la puissance laser dans une zone de contrôle de la surface à étiquettes si l'on détermine que la surface de pose en face de l'unité de lecture optique (30) est une surface à étiquette, et exécuter une opération d'impression d'étiquette sur une zone à étiquette de la surface à étiquette du support enregistrable, tel que le procédé pour commander la puissance laser comprend :

-- l'identification d'une puissance laser en sortie requise en se basant sur la surface de pose correspondante ; et
-- le réglage de la puissance laser à une intensité prédéterminée en se basant sur une caractéristique de pente précédemment calculée et stockée entre un voltage d'entrée laser (DAC) et une puissance laser en sortie associée à une plage de puissance laser en sortie ($P_L$, $P_H$) dans laquelle la puissance laser en sortie identifiée est incluse,

**caractérisé en ce que**
la caractéristique de pente est déterminée en se basant sur deux fonctions linéaires, l'une des fonctions linéaires étant calculée au voisinage d'une puissance laser de référence à faible niveau de sortie ($P_L$), et l'autre des fonctions linéaires étant calculée au voisinage d'une puissance laser de référence à fort niveau de sortie ($P_H$).

2. Procédé selon la revendication 1, dans lequel la caractéristique de pente précédemment calculée et stockée est détectée et stockée pendant la fabrication du lecteur de disques optiques (ODD).

3. Procédé selon la revendication 1, dans lequel les plages de puissance laser en sortie ($P_L$, $P_H$) comprennent une première plage incluant une première puissance d'enregistrement pour une surface à données du disque optique, et une seconde plage incluant une seconde puissance d'enregistrement pour une surface à étiquette du disque optique.

4. Procédé selon la revendication 1, dans lequel la détection et le stockage de la caractéristique de pente précédemment calculée et stockée pour une plage de puissance laser en sortie ($P_L$, $P_H$) comprend :

- la détection d'une puissance laser en sortie correspondante (P) pour au moins une valeur d'entrée prédéterminée pour la plage de puissance laser en sortie ($P_L$, $P_H$) ; et
- le calcul d'une équation sensiblement linéaire qui met en relation une valeur d'entrée avec une valeur laser en sortie en se basant sur les deux valeurs d'entrée prédéterminées et sur les puissances laser en sortie détectées correspondantes (P), et le stockage de l'équation linéaire

5. Procédé selon la revendication 4, dans lequel la puissance laser en sortie (P) est détectée par un dispositif de mesure de puissance laser.

6. Procédé selon la revendication 1, dans lequel le support enregistrable est un disque "LightScribe" (marque déposée).

# FIG. 1

# FIG. 2

# FIG. 3

```
                    Start

              Label surface              S10
              of disc seated ?    No

                    Yes

          Move to control feature zone    S11

          Calculate target FPDO value     S12
               and input voltage
            for laser power to be set

             Turn on Laser diode          S13

                                                        S21

          Detect current FPDO value       S14
                                              Increase laser power

              Target FPDO >               S20
              Current FPDO ?      No

                    Yes

             Move to label zone           S22

         Perform label-printing operation  S23
            at controlled laser power

                    End
```

# FIG. 4

Label Zone

Control Feature Zone

Clamping/Logo Zone

Center Hole

# FIG. 5

FPDO(V)

2.5

f(X)=-m*X+2.5

F1=f(P1)=-m*P1+2.5

F1

P1

P(mw)

## FIG. 6

# FIG. 7

```
                    ┌──────────────────────┐
                    │        Start         │
                    └──────────────────────┘
                                │
                                ▼
            ┌──────────────────────────────────┐
            │ Perform laser power setup operation│  S30
            │      for each of data surface and  │
            │      label surface in manufacturing│
            │      process of optical disc drive │
            │      & Store power setup data      │
            └──────────────────────────────────┘
                                │
                                ▼
                   ◇ Optical disc seated ? ◇  S40 ──No──┐
                                │                        │
                               Yes                       │
                                ▼                        │
                   ◇ Disc includes label surface ? ◇  S50 ──No──┐
                                │                                 │
                               Yes                                │
                                ▼                                 │
                   ◇ Seated surface = label surface ? ◇  S60 ──No──┐
                                │                                   │
                               Yes                                  ▼
                                                    ◇ Seated surface = data surface ? ◇  S70 ──No──┐
                                │                                   │                               │
                                ▼                                  Yes                              │
            ┌──────────────────────────────┐        ┌──────────────────────────────┐               │
            │     Detect input voltage     │  S61   │     Detect input voltage     │  S71          │
            │ corresponding to record laser│        │ corresponding to record laser│               │
            │     power for label surface  │        │     power for data surface   │               │
            │ based on stored power setup  │        │ based on stored power setup  │               │
            │           data               │        │           data               │               │
            └──────────────────────────────┘        └──────────────────────────────┘               │
                                │                                   │                               │
                                ▼                                   ▼                               │
            ┌──────────────────────────────┐        ┌──────────────────────────────┐               │
            │ Perform label-printing       │  S62   │ Perform recording operation  │  S72          │
            │ operation at record laser    │        │ at record laser power for    │               │
            │ power for label surface      │        │ data surface                 │               │
            └──────────────────────────────┘        └──────────────────────────────┘               │
                                │                                   │                               │
                                ▼◄──────────────────────────────────┴───────────────────────────────┘
                    ┌──────────────────────┐
                    │         End          │
                    └──────────────────────┘
```

# FIG. 8

# FIG. 9

S1 : y=a*(x+g1)+b ; y=c*(x+g1)+d
=> y=a*x+b+a*g1 ; y=c*x+d+c*g1

S2 : y=a*(x-g2)+b ; y=c*(x-g2)+d
=> y=a*x+b-a*g2 ; y=c*x+d-c*g2

# FIG. 10

|  | #1 | #2 | #3 | #4 | #5 | #6 | #7 | #8 | #9 | #10 |
|---|---|---|---|---|---|---|---|---|---|---|
| Conv. | 51.0 | 54.8 | 53.4 | 53.4 | 53.2 | 54.3 | 54.0 | 53.2 | 51.5 | 54.3 |
| This invention | 58.2 | 60.5 | 59.9 | 60.7 | 59.9 | 60.4 | 60.4 | 60.7 | 59.0 | 61.6 |
|  | #11 | #12 | #13 | #14 | #15 | #16 | #17 | #18 | #19 | #20 |
| Conv. | 53.6 | 53.9 | 52.8 | 51.8 | 53.9 | 52.2 | 52.0 | 53.6 | 54.0 | 52.3 |
| This invention | 60.0 | 61.4 | 59.2 | 58.6 | 60.7 | 61.4 | 59.5 | 60.1 | 60.2 | 59.4 |

# FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1308938 A2

- EP 0478275 A2